# EUROPÄISCHE PATENTSCHRIFT

(11) **EP 2 599 603 B1**
(45) Veröffentlichungstag und Bekanntmachung des Hinweises auf die Patenterteilung: **25.07.2018**
(21) Anmeldenummer: 12195012.5
(22) Anmeldetag: 30.11.2012
(51) Int. Cl.: B28B 1/30, B28B 5/02, B28B 11/24, H01G 4/12, F26B 3/02, F26B 15/18, B22F 3/00, B22F 3/22, B22F 5/00, H01G 4/30

(54) **Vorrichtung zur Herstellung von Grünfolien aus keramischem und/oder metallischem Werkstoff**
Device for the production of green films made from ceramic and/or metallic material
Dispositif de fabrication de feuilles vertes en matière céramique et/ou métallique

(30) Priorität: 02.12.2011 DE 102011120546
(43) Veröffentlichungstag der Anmeldung: 05.06.2013
(73) Patentinhaber: Fraunhofer-Gesellschaft zur Förderung der angewandten Forschung, 80686 München (DE)
(72) Erfinder: Scheithauer, Uwe, 01309 Dresden (DE); Richter, Hans-Jürgen, 01257 Dresden (DE); Moritz, Tassilo, 09599 Freiberg (DE)
(74) Vertreter: Pfenning, Meinig & Partner mbB

(56) Entgegenhaltungen:
- EP-A2- 1 486 304
- DE-A1- 2 607 504
- DE-T2- 60 018 352
- GB-A- 1 230 305
- JP-A- H0 592 407
- JP-A- H01 264 974
- JP-A- 2009 208 981
- "polyester film Mylar Product Information", PRODUCT INFORMATION FROM DUPONT TEIJIN FILMS, 1. Juni 2003 (2003-06-01), XP055117890,

## Beschreibung

Die Erfindung betrifft eine Vorrichtung zur Herstellung von Grünfolien aus keramischem und/oder metallischem Werkstoff. Die so erhaltenen Grünfolien weisen eine bestimmte Dicke über die Fläche auf und können ggf. nach einer Formgebung oder Strukturierung als Vorprodukt durch Sinterung weiter verarbeitet werden. Dabei können mehrere solcher Grünfolien vor der Sinterung miteinander laminiert werden.

Für die Herstellung solcher Grünfolien wird üblicherweise das so genannte "Doctor-Blade-Verfahren" eingesetzt, bei dem ein Schlicker auf eine Trägerfolie überwiegend mittels eines höhen verstellbaren Rakels mit einer bestimmten Schichtdicke verteilt wird. Da der Schlicker mit einer Suspension, in der keramische Partikel und ein großer Anteil einer Flüssigkeit enthalten sind, gebildet ist, ist eine Entfernung der Flüssigkeit durch eine Trocknung erforderlich, um eine ausreichend feste weiter verarbeitbare Grünfolie erhalten zu können.

Das übliche Vorgehen für eine solche Trocknung ist in der DE 10 2007 019 438 B3 beschrieben. Die Trocknung erfolgt dabei in der Regel durch Zufuhr von Luft, Wärme und/oder Infrarotstrahlung. Die Flüssigkeit kann dabei ausschließlich über die Oberseite aus dem Schlicker, der auf der Trägerfolie als Film ausgebildet ist, abgeführt werden, obwohl eine Zufuhr von Energie die zur Entfernung der Flüssigkeit von oben und auch zusätzlich von unten möglich ist.

Zur Einhaltung einer guten Qualität, bei Vermeidung von Spannungsgradienten in der gegossenen Folie, die wiederum zu Eigenspannungen, Defekten und Rissen führen können, sowie der Vermeidung eines Gradienten in der Mikrostruktur der Grünfolien durch Umlagerungsprozesse der Keramikpartikel, muss dabei ein großer Trocknungszeitraum eingehalten werden, der die Produktivität nachteilig beeinflusst. Diesen Nachteilen kann auch durch eine begrenzte Schichtdicke der entsprechend hergestellten Grünfolien entgegen gewirkt werden. Dies ist aber ebenfalls nicht immer gewünscht oder es wird auch dadurch die Produktivität verringert.

In der DE 10 2007 019 438 B3 wird vorgeschlagen, für die Trocknung eine Bestrahlung mit UV-Strahlung durchzuführen. Dabei handelt es sich aber nicht ohne weiteres um eine Trocknung, vielmehr wird eine Vernetzung organischer Inhaltsstoffe durch die Bestrahlung erreicht, um die Festigkeit zu erhöhen. In dieser Form können daher Schlicker verarbeitet werden, die mit organischen, UV-aushärtenden Stoffen als Flüssigkeit hergestellt sind. Da die UV-Bestrahlung nur begrenzt in die Tiefe eindringt und dadurch lediglich eine entsprechend tiefenbegrenzte Vernetzung der polymeren organischen Stoffe erreichbar ist, ist natürlich auch die so herstellbare Dicke der Grünfolien begrenzt. Zudem können damit später keine mehrlagigen Grünfolien damit hergestellt werden, da dieser Aushärtungsprozess irreversibel ist. Eine Verbindung einzelner Laminate, wie dies eigentlich üblicherweise möglich ist, kann dann auch nicht realisiert werden.

Aus ökonomischen und Umweltschutzgründen ist es aber gewünscht, Schlicker mit einer wässrigen Suspension zu Grünfolien zu verarbeiten. Dabei kann die Suspension ausschließlich mit Wasser oder auch mit einem Mindestanteil an Wasser gebildet sein. Neben Wasser sind die jeweiligen keramischen Partikel und ggf. zusätzlich mindestens eine organische Binderkomponente enthalten. Die mindestens eine organische Binderkomponente verbleibt nach der Trocknung in der erhaltenen Grünfolie und wird erst bei einer zu einer Sinterung führenden Wärmebehandlung ausgetrieben.

Solche Schlicker, in denen Wasser als eine wesentliche flüssige Komponente enthalten ist, lassen sich aber mit der UV-Bestrahlung nicht besser trocknen, da das Wasser über eine Dampfbildung in seiner Gasphase ausgetragen werden muss.

So ist aus JP 2009 208981 A1 ein Verfahren zur Herstellung von Platten aus keramischem Werkstoff als Grünkörper bekannt. Dabei soll eine Slurry, in der keramisches Pulver enthalten ist, auf ein Band aus Mylar aufgebracht und mittels Doktorblade in eine bestimmte Dicke gebracht werden. Anschließend soll eine Trocknung durchgeführt werden.

Die DE 26 07 504 A1 betrifft eine Vorrichtung zum Trocknen von dünnen Materialien in Stücken oder Bahnen, mit der im Durchlauf verfahren werden kann.

Aus EP 1 486 304 A2 und DE 600 18 352 T2, die den Oberbegriff des Anspruchs 1 offenbart, sind Möglichkeiten für die Herstellung band- oder plattenförmiger Keramikelemente bekannt, bei denen der in Form einer Suspension vorliegende Werkstoff auf einen Träger aufgebracht und mittels Wärme von Wasser befreit wird.

Es ist daher Aufgabe der Erfindung, die Herstellung von keramischen und/oder metallischen Grünfolien zu verbessern und dabei die für die Herstellung erforderliche Zeit zu verkürzen sowie die Qualität der hergestellten Grünfolien zu erhöhen.

Erfindungsgemäß wird diese Aufgabe mit einer Vorrichtung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Die erfindungsgemäße Vorrichtung weist einen Vorratsbehälter für einen keramischen und/oder metallischen Schlicker auf. Der Schlicker ist mit einer Suspension einer Flüssigkeit, Partikeln eines keramischen und/oder metallischen Werkstoffs und ggf. mindestens einer organischen Binderkomponente gebildet. Außerdem ist am Vorratsbehälter eine Auslauföffnung für den Schlicker vorhanden, aus der Schlicker auf einen bandförmigen Träger mit einer konstanten Schichtdicke gelangt, so dass eine Schicht des Schlickers mit vorgebbarer konstanter Schichtdicke auf dem bandförmigen Träger ausgebildet wird. Dabei können unter dem Begriff keramischer Werkstoff auch Gläser oder Glaskeramik verstanden werden.

Im Bereich des bandförmigen Trägers ist eine Trocknungseinrichtung zur Entfernung der Flüssigkeit vorhanden.

Der bandförmige Träger ist aus einem semipermeablen Werkstoff oder Material gebildet, der für die Flüssigkeit und die Partikel nicht permeabel und für die in die Gasphase überführte Flüssigkeit permeabel ist.

Der bandförmige Träger kann translatorisch bewegt werden, wodurch eine zumindest nahezu kontinuierliche Herstellung von Grünfolien möglich wird. Dabei kann der bandförmige Träger von Rolle zu Rolle gewickelt werden oder als Endlosband ausgebildet sein. Eine Relativbewegung kann auch durch translatorische Bewegung des Vorratsbehälters mit Auslaufbehälter, die allein oder zusätzlich durchgeführt werden kann, erreicht werden.

Allein oder zusätzlich dazu kann die Trocknungseinrichtung einen erwärmten Gasstrom auf die Oberfläche des auf dem bandförmigen Träger als Schicht ausgebildeten Schlicker richten. Eine Trocknung kann auch mit Infrarotstrahlung erreicht oder unterstützt werden.

Für eine Unterstützung der Trocknung kann ein erwärmter Luftstrom unterhalb des bandförmigen Trägers oder eines Trägerelements, auf das nachfolgend noch eingegangen wird, entlang geführt werden.

Die Suspension kann dabei mit keramischen Partikeln oder metallischen Partikeln oder auch einer Mischung von keramischen mit metallischen Partikeln hergestellt werden, um entsprechende Grünfolien herzustellen.

Unterhalb des bandförmigen Trägers, im Bereich in dem mindestens eine Trocknungseinrichtung wirksam ist, ist eine einen Unterdruck erzeugende Einrichtung vorgesehen. Mit dem Unterdruck kann gebildeter Wasserdampf, der durch den semipermeablen bandförmigen Träger gelangt, besser abgeführt werden, wodurch die Trocknung der auf dem bandförmigen Träger aufliegenden, die Grünfolie bildenden Masse unterstützt werden kann. Die Durchlässigkeit des bandförmigen Trägers kann dadurch zusätzlich erhöht werden.

Zumindest im Bereich, in dem eine Unterdruck erzeugende Einrichtung wirksam ist, ist unmittelbar unter dem bandförmigen Träger ein gasdurchlässiges Trägerelement angeordnet. Dieses Trägerelement kann bevorzugt in Form eines offenporigen Schaums (Keramik, Metall), einer Faserstruktur, eines Durchbrechungen aufweisenden plattenförmigen Elements oder eines Geflechts ausgebildet sein. Auf dem Trägerelement liegt der bandförmige Träger flächig auf. Die in die Gasphase überführte Flüssigkeit, die durch den entsprechend dafür permeablen bandförmigen Träger hindurch geführt worden ist, kann in Folge des wirkenden Unterdrucks besser abgeführt werden. Ein poröses Trägerelement sollte trotzdem eine möglichst glatte Oberfläche aufweisen, um den Verschleiß gering zu halten. Das poröse Material sollte hierfür, beispielsweise durch Schleifen mechanisch bearbeitbar sein. Zusätzlich soll auch ein saugfähiges Material unterhalb des bandförmigen Trägers angeordnet oder daran angebracht sein. Damit kann eventuell bereits kondensierte Flüssigkeit aufgenommen und dann daraus abgeführt werden. Es wird auch die Kapillarwirkung eines saugfähigen Materials für die Abführung der Flüssigkeit zusätzlich ausgenutzt. Ein solches Material kann beispielsweise auch ein Gestein oder ein keramischer oder metallischer Körper sein, das/der über diese Eigenschaften verfügt.

Die Oberfläche eines Trägerelements, die mit dem bandförmigen Träger in Kontakt kommt, sollte möglichst eben und glatt sein, um die Reibung bei der Bewegung des bandförmigen Trägers klein zu halten. Dies kann durch eine geeignete mechanische Bearbeitung erreicht werden. Es kann aber auch an dieser Oberfläche eine geeignete Membran vorhanden sein, deren Permeabilität kann dabei auch größer, als die des bandförmigen Trägers sein. Sie kann sogar permeabel für die Flüssigkeit sein, da eine solche Membran lediglich die Reibung zwischen Trägerelement und bandförmigem Träger verringern und zumindest durchlässig für die dampfförmige Flüssigkeit sein soll.

Der Unterdruck unterhalb des bandförmigen Trägers wird durch einen Luftstrom nach dem Venturiprinzip erzeugt. Dabei kann ein Luftstrom zumindest nahezu parallel zur Bewegungsrichtung des bandförmigen Trägers geführt werden.

Es ist von Vorteil, wenn das gasdurchlässige Trägerelement gut wärmeleitend ist. Es kann auch ein Trägerelement beheizbar ausgebildet sein. Hierfür kann eine Heizeinrichtung vorhanden oder das Trägerelement direkt, beispielsweise durch elektrische Widerstandsbeheizung, beheizbar sein. Ein Trägerelement kann dabei auch eine große Wärmekapazität aufweisen, wodurch eine verbesserte Trocknung erreicht und Temperaturschwankungen reduziert werden können.

Es besteht auch die Möglichkeit, oberhalb des Schlickers, der als Film auf dem bandförmigen Träger ausgebildet ist, einen weiteren bandförmiger Träger anzuordnen, mit dem die Schichtdicke des Schlickers eingestellt oder eingehalten werden kann. Der weitere bandförmige Träger sollte ebenfalls aus einem semipermeablen Werkstoff oder Material bestehen, der/das für die Flüssigkeit nicht permeabel aber für die in die Gasphase bei einer Trocknung überführte Flüssigkeit permeabel ist. Mit einem weiteren Träger oberhalb der Schicht kann auch ein direkter Kontakt zwischen dem Schlicker und dem zur Trocknung eiungesetzten Luftstrom vermieden werden.

Außerdem kann für die Trocknung ein bevorzugt erwärmter Luftstrom so über den auf dem bandförmigen Träger ausgebildeten Schlickerfilm geführt werden, dass er nicht senkrecht oder entsprechend steil auf die Oberfläche auftrifft, sondern parallel oder in einem leicht geneigten Winkel oberhalb der Oberseite entlang strömt. Dies kann mit entgegengesetzter Strömungsrichtung zur Bewegungsrichtung des bandförmigen Trägers erfolgen.

Der oder die bandförmige(n) Träger und ggf. auch ein Trägerelement sollten aus einem hydrophoben oder mit einer hydrophoben Oberflächenbeschitung versehenen Werkstoff oder Material bestehen. Dadurch kann insbesondere Wasser als Suspensionsflüssigkeit besser zurück gehalten und von einem Trägerelement nach einer ggf. aufgetretenen Kondensation leichter abgeführt werden.

Mit der Erfindung ist es besonders vorteilhaft möglich, die Herstellung von keramischen und/oder metallischen Grünfolien, bei der eine Suspension für den Schlicker mit Wasser eingesetzt wird, zu verbessern und abzukürzen. Dabei kann die Suspension ausschließlich mit Wasser als Flüssigkeit hergestellt worden sein. Der Mindestanteil an Wasser in der Suspension kann aber auch nur 20 % betragen, um die gewünschten Effekt ausnutzen zu können. Es können aber auch Suspensionen in denen Polymere und ggf. auch Lösungsmittel als Flüssigkeit enthalten sind, mit der Erfindung verarbeitet werden.

Da mit der Erfindung eine Abfuhr von Flüssigkeit bei der Trocknung von beiden Seiten gleichzeitig möglich ist, treten über die Schichtdicke während der Trocknung nur kleine Feuchtigkeitsunterschiede auf, was zu einer Reduzierung von mechanischen Spannungen in der hergestellten Grünfolie führt. Es ist so auch die Herstellung dickerer Grünfolien im Vergleich zum Stand der Technik möglich. Bei gleicher Dicke kann die Trocknung bis zum Erhalt der erforderlichen Grünfestigkeit in kürzerer Zeit erreicht werden.

Die Konsistenz kann innerhalb der hergestellten Grünfolie homogener gehalten werden. Defekte, wie z.B. Risse können vermieden werden.

Nachfolgend soll die Erfindung beispielhaft näher erläutert werden.

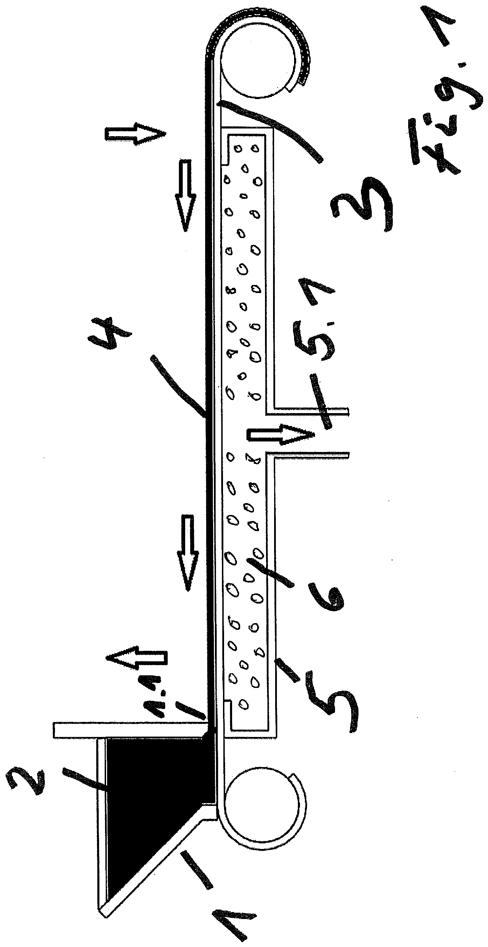

### Dabei zeigt Figur 1:

Ein Beispiel einer einfachen Ausführung einer erfindungsgemäßen Vorrichtung.

In einem Vorratsbehälter 1 ist ein Schlicker 2 enthalten, der aus einer Suspension keramischer Partikel, metallischer Partikel oder einem Gemisch keramischer und metallischer Partikel mit einer Flüssigkeit gebildet ist, enthalten. Der Schlicker 2 kann durch eine spaltförmige Auslauföffnung 1.1 aus dem Vorratsbehälter austreten und auf einem bandförmigen Träger 3 eine Schicht 4 mit konstanter Dicke aus dem Schlicker bilden. Der bandförmige Träger 3 ist aus einem Material gebildet, das für die in die Gasphase überführte Flüssigkeit der Suspension permeabel ist, aber für die Flüssigkeit und die Partikel nicht durchlässig ist. Dies kann eine Folie aus Polyethylenterephthalat (PET) oder eine wasserdampfdurchlässige Mikrofasermembran sein.

Dabei wurde bei Versuchen eine PTFE-Membran mit ca. 20.000 g/m^{2*}24 h, wie sie von der Firma Gore-Tex kommerziell erhältlich ist, eingesetzt.

Der bandförmige Träger 3 ist ausgehend von der Auslassöffnung 1.1 translatorisch bewegbar, so dass sich die mit dem Schlicker ausgebildete Schicht 4 davon weg bewegt.

Oberhalb des auf dem bandförmigen Trägers 3 ausgebildeten Films ist eine Trocknungseinrichtung vorhanden mit der erwärmte Luft oberhalb des auf dem bandförmigen Trägers 3 ausgebildeten Schlickerfilms so entlang führt, wie es mit den Pfeilen kenntlich gemacht ist. Die erwärmte Luft strömt im Gegenstrom zur Bewegungsrichtung des bandförmigen Trägers 3 und es kann so Flüssigkeit, die in die Gasphase überführt worden ist, aus der mit dem Schlicker gebildeten Schicht 4 abgeführt werden.

Die Flüssigkeit der für den Schlicker eingesetzten Suspension kann aber auch durch den bandförmigen Träger3 auf der gegenüberliegenden Seite, also hier nach unten durch die Permeabilität des Materials des bandförmigen Trägers 3, abgeführt werden.

Dabei ist bei diesem Beispiel unterhalb des bandförmigen Trägers 3 ein Gehäuse 5 vorhanden, in dem ein Unterdruck gegenüber der Umgebung erzeugt werden kann, wie es mit dem Pfeil in der Öffnung 5.1 des Gehäuses 5 angedeutet ist. Dadurch kann die Abfuhr der Flüssigkeit verbessert und die für die Trocknung des Schlickers auf dem bandförmigen Träger 3 erforderliche Zeit, bis eine weiter verarbeitbare Grünfolie erhalten worden ist, verkürzt werden. Dadurch besteht auch die Möglichkeit einen kürzeren bandförmigen Träger 3 als beim Stand der Technik einzusetzen, so dass der erforderliche Bauraum auch reduziert werden kann.

Im Gehäuse 5 oder an Stelle dessen ist bei diesem Beispiel auch ein gasdurchlässiges Trägerelement 6 angeordnet. Dieses kann auch beheizbar sein, um die Trocknung noch effektiver zu gestalten. Ein Trägerelement 6 kann dabei offenporös sein. Es kann aber auch ausreichend sein ein Trägerelement 6 einzusetzen, mit dem die Abführung der Flüssigkeit durch Kapillarkräfte erfolgt oder zumindest damit unterstützt wird.

Ein Gehäuse 5 kann auch durch ein flexibel verformbares Element, beispielsweise einer Folie, ersetzt werden. Dieses Element kann vorteilhaft fluiddicht sein. Eine geringe Permeabilität ist aber möglich. Es soll lediglich die Möglichkeit gegeben sein, dass im Inneren ein gegenüber der Umgebung reduzierter Druck eingehalten werden kann.

Bei der Herstellung einer keramischen Grünfolie als Beispiel kann eine Suspension in der eine Mischung aus Aluminiumoxid- und Calciumcarbonatpulver, Polyvinylalkohol und Polyacrylat als Binder, ggf. Glycerin, Entschäumer, Netzmittel und Dispergiermittel mit Wasser als Flüssigkeit eingesetzt werden. In der Mischung waren 52 Masse-% Aluminiumoxid- und Calciumcarbonatpulver, was 23 Vol.-% entsprach, 39 Masse-% Wasser (65 Vol.-%), 3,5 Masse-% Polyvenylalkohol (4,5 Vol.-%), 1,5 Masse-% Polyacrylat (2,0 Vol.-%), 3,5 Masse-% Glycerin (4,5 Vol.-%) und ein Rest von 0,5 Masse-% mit 1,0 Vol.-% enthalten.

Die Vermischung erfolgte in einer Planetenkugelmühle und eine Homogenisierung wurde in einem Rollenstuhl über einen Zeitraum von 12 h durchgeführt.

Nach dem Einfüllen des mit der Suspension gebildeten Schlickers 2 in den Vorratsbehälter 1 wurde durch entsprechende Einstellung eines Spaltes an der Auslauföffnung 1.1 eine Schicht 4 des Schlickers mit einer konstanten Schichtdicke über die gesamte Breite von 500 µm ausgebildet, der mit dem translatorisch bewegten bandförmigen Träger 3 abgeführt werden kann.

Bei Vergleichsversuchen konnte bei einer auf einem Träger 3 ausgebildeten Schicht 4 des Schlickers mit einer herkömmlich auf einem nichtpermeablen Träger ausgebildeten Schlickerschicht mit gleicher Konsistenz und Schichtdicke in einem Klimaschrank, mit dem die Trocknung erreicht werden sollte, deutliche Unterschiede in der erforderlichen Zeit und Qualität der erhaltenen Grünfolien festgestellt werden.

So wurde eine Schicht 4 mit einer Schichtdicke auf einem semipermeablen Träger 3 ausgebildet und in einen Klimaschrank eingesetzt, in dem die Temperatur sukzessive von 22 °C auf 45 °C erhöht wurde. Dabei wurde eine Heizrate von ca. 0,5 K/min eingehalten. Die Luftfeuchtigkeit im Ausgangszustand von 40 % wurde ebenfalls sukzessive auf 12 % so reduziert, dass die Wassermenge in Luft bei steigender Temperatur in Luft konstant bleibt. Nach ca. 60 min wurde eine ausreichende Trocknung erreicht.

Die getrocknete Grünfolie bestand im Wesentlichen aus dem Aluminiumoxid/Calciumcarbonat mit den Binderanteilen, sie war riss- und defektfrei und hatte eine Restfeuchte von 5 %.

Bei dem Vergleichsbeispiel nach dem Stand der Technik erfolgte die Trocknung unter gleichen Bedingungen. Nach Erreichen der maximalen Temperatur von 45 °C musste diese jedoch deutlich länger gehalten werden, bis der erforderliche Trocknungsgrad erreicht worden ist. Hierfür waren ca. 2 h erforderlich. Die Schicht 4 war dann trotzdem nicht völlig frei von Defekten und Rissen.

## Patentansprüche

1. Vorrichtung zur Herstellung von Grünfolien aus keramischem und/oder metallischen Werkstoff, umfassend einen Vorratsbehälter (1) für Schlicker (2.1), der mit einer Suspension einer Flüssigkeit, Partikeln eines keramischen und/oder metallischen Werkstoffs und ggf. mindestens einer organischen Binderkomponente gebildet ist, befüllbar ist; dabei am Vorratsbehälter (1) eine Auslauföffnung (1.1) für den Schlicker (2) vorhanden ist, aus der Schlicker (2) auf einen bandförmigen Träger (3) mit einer konstanten Schichtdicke gelangt, so dass eine Schicht (4) des Schlickers mit vorgebbarer konstanter Schichtdicke ausbildbar ist, und im Bereich des bandförmigen Trägers (3) eine Trocknungseinrichtung zur Entfernung der Flüssigkeit vorhanden ist, wobei der bandförmige Träger (3) aus einem semipermeablen Werkstoff oder Material gebildet ist, der/das für die Flüssigkeit und die keramischen und/oder metallischen Partikel nicht permeabel und für in die Gasphase überführte Flüssigkeit permeabel ist, wobei
unterhalb des bandförmigen Trägers (3), im Bereich in dem die Trocknungseinrichtung wirksam ist, eine einen Unterdruck erzeugende Einrichtung wirksam ist und dabei der Unterdruck unterhalb des bandförmigen Trägers (3) durch einen Luftstrom nach dem Venturiprinzip erzeugbar ist und **dadurch gekennzeichnet, dass** im Bereich, in dem eine Unterdruck erzeugende Einrichtung wirksam ist, unmittelbar unter dem bandförmigen Träger (3) ein gasdurchlässiges Trägerelement (6), bevorzugt in Form eines offenporigen Schaums, einer Faserstruktur, eines Durchbrechungen aufweisenden plattenförmigen Elements oder eines Geflechts angeordnet ist, auf dem der bandförmige Träger (3) flächig aufliegt und durch den eine Abfuhr von gasförmiger Flüssigkeit in Folge des Unterdrucks erfolgt; wobei ein Trägerelement (6) eine Kapillarwirkung für die Flüssigkeit aufweist.

2. Vorrichtung nach Anspruch 1, **dadurch gekennzeichnet, dass** der bandförmige für die Flüssigkeit nicht permeable Träger (3) aus einem hydrophoben oder mit einer hydrophoben Oberflächenbeschichtung versehenen Werkstoff oder Material besteht.

3. Vorrichtung nach Anspruch 1 oder 2, **dadurch gekennzeichnet, dass** der bandförmige Träger (3) aus Polyethylenterephtalat (PET) besteht oder eine wasserdampfdurchlässige Mikrofasermembran ist.

4. Vorrichtung nach einem der vorhergehenden Ansprüche, **dadurch gekennzeichnet, dass** der bandförmige Träger (3) und der Vorratsbehälter (1) mit Auslauföffnung (1.1) translatorisch relativ zueinander bewegbar sind.

5. Vorrichtung nach einem der vorhergehenden Ansprüche, **dadurch gekennzeichnet, dass** die Trocknungseinrichtung einen erwärmten Gasstrom auf die Oberfläche des auf dem bandförmigen Träger (3) als Schicht (4) ausgebildeten Schlicker richtet.

6. Vorrichtung nach Anspruch 1, **dadurch gekennzeichnet, dass** ein gasdurchlässiges Trägerelement (6) beheizbar ist.

7. Vorrichtung nach einem der vorhergehenden Ansprüche, **dadurch gekennzeichnet, dass** die Flüssigkeit Wasser ist oder in der Suspension ein Anteil an Wasser von mindestens 25 % enthalten ist.

8. Vorrichtung nach einem der vorhergehenden Ansprüche, **dadurch gekennzeichnet, dass** oberhalb des Schlickers, der als Schicht (4) auf dem bandförmigen Träger (3) ausgebildet ist, ein weiterer bandförmiger Träger angeordnet ist, mit dem die Schichtdicke der mit dem Schlicker gebildeten Schicht (4) einstellbar ist und der weitere bandförmige Träger aus einem semipermeablen Werkstoff oder Material besteht, der/das für die Flüssigkeit nicht permeabel aber für die in die Gasphase bei einer Trocknung überführte Flüssigkeit permeabel ist.

## Claims

1. An apparatus for manufacturing green films composed of a ceramic and/or metallic material, comprising a storage container (1) for slurry (2.1) that can be filled with a suspension of a liquid, particles of a ceramic and/or metallic material, and optionally at least one organic binder component, wherein an outflow opening (1.1) for the slurry (2) is present at the storage container (1), from which outflow opening slurry (2) moves onto a band-like carrier (3) having a constant film thickness so that a film (4) of the slurry having a predefinable constant film thickness can be formed; and wherein a drying device is present in the region of the band-like carrier (3) to remove the liquid,
with the band-like carrier (3) being formed from a semipermeable substance or material that is not permeable for the liquid and for the ceramic and/or metallic particles and that is permeable for liquid that has transitioned into the gas phase; and wherein
a device generating a vacuum is effective below the band-like carrier (3) in the region in which the drying device is effective, with the vacuum being able to be generated in accordance with the Venturi principle below the band-like carrier (3) by an airflow,
**characterized in that**
a gas-permeable carrier element (6), preferably in the form of an open-pore foam, a fibrous structure, a plate-like element having perforations, or a meshwork, is arranged directly below the band-like carrier (3) in the region in which a device generating a vacuum is effective, on which carrier element the band-like carrier (3) lies over the surface and by which a removal of gaseous liquid takes place as a consequence of the vacuum, with a carrier element (6) having a capillary effect for the liquid.

2. An apparatus in accordance with claim 1, **characterized in that** the band-like carrier (3) not permeable for the liquid comprises a hydrophobic substance or material or a substance or material provided with a hydrophobic surface coating.

3. An apparatus in accordance with claim 1 or claim 2, **characterized in that** the band-like carrier (3) consists of polyethylene terephthalate (PET) or is a microfiber membrane permeable for water vapor.

4. An apparatus in accordance with one of the preceding claims, **characterized in that** the band-like carrier (3) and the storage container (1) with the outflow opening (1.1) are movable in translation relative to one another.

5. An apparatus in accordance with one of the preceding claims, **characterized in that** the drying device directs a heated gas flow to the surface of the slurry formed on the band-like carrier (3) as a film (4).

6. An apparatus in accordance with claim 1, **characterized in that** a gas-permeable carrier element (6) is heatable.

7. An apparatus in accordance with one of the preceding claims, **characterized in that** the liquid is water or a proportion of water of at least 25% is contained in the suspension.

8. An apparatus in accordance with one of the preceding claims, **characterized in that** a further band-like carrier is arranged above the slurry that is formed as a film (4) on the band-like carrier (3), with which further band-like carrier the film thickness of the film (4) formed by the slurry can be set; and **in that** the further band-like carrier comprises a semi-permeable substance or material that is not permeable for the liquid, but is permeable for the liquid that has transitioned into the gas phase on a drying.

## Revendications

1. Dispositif de fabrication de feuilles crues en un matériau céramique et/ou métallique, comprenant un réservoir (1) pour une barbotine (2.1), qui peut être rempli d'une suspension d'un liquide, de particules d'un matériau céramique et/ou métallique et éventuellement d'au moins un composant liant organique ; un orifice de décharge (1.1) destiné à la barbotine (2) étant présent sur le réservoir (1), orifice à partir duquel la barbotine arrive, avec une épaisseur de couche constante, sur un support (3) en forme de bande, de telle sorte qu'il se forme une couche (4) de barbotine, présentant une épaisseur de couche constante prédéfinissable, et un dispositif de séchage, destiné à éliminer le liquide, étant présent dans la zone du support (3) en forme de bande, le support (3) en forme de bande étant formé d'un matériau ou d'une matière qui n'est pas perméable au liquide et aux particules céramiques et/ou métalliques et est perméable au liquide transféré dans la phase gazeuse, un dispositif produisant une dépression étant actif en-dessous du support (3) en forme de bande, dans la zone dans laquelle est actif le dispositif de séchage, la dépression, en-dessous du support (3) en forme de bande, pouvant être produite par un courant d'air utilisant le principe du Venturi, **caractérisé en ce que**, dans la zone dans laquelle est actif un dispositif produisant une dépression, et immédiatement en-dessous du support (3) en forme de bande, un élément support (6) perméable aux gaz est disposé, de préférence sous forme d'une mousse à alvéoles ouverts, d'une structure fibreuse, d'un élément en forme de plaque présentant des passages, ou d'un treillis, sur lequel le support (3) en forme de bande est disposé en pleine surface, et grâce auquel a lieu une évacuation du liquide gazeux en conséquence de la dépression ; un élément support (6) présentant un effet de capillarité pour le liquide.

2. Dispositif selon la revendication 1, **caractérisé en ce que** le support (3) en forme de bande, non perméable au liquide, est constitué d'un matériau ou d'une matière hydrophobe, ou revêtu d'un revêtement superficiel hydrophobe.

3. Dispositif selon la revendication 1 ou 2, **caractérisé en ce que** le support (3) en forme de bande est constitué de poly(téréphtalate d'éthylène) (PET) ou est une membrane en microfibres, perméable à la vapeur d'eau.

4. Dispositif selon l'une des revendications précédentes, **caractérisé en ce que** le support (3) en forme de bande et le réservoir (1) comportant l'orifice de décharge (1.1) peuvent se déplacer l'un par rapport à l'autre en translation.

5. Dispositif selon l'une des revendications précédentes, **caractérisé en ce que** le dispositif de séchage dirige un courant gazeux chauffé sur la surface de la barbotine, configurée sous forme d'une couche (4) sur le support (3) en forme de bande.

6. Dispositif selon la revendication 1, **caractérisé en ce qu'**un élément support (6) perméable aux gaz est chauffable.

7. Dispositif selon l'une des revendications précédentes, **caractérisé en ce que** le liquide est l'eau, ou que la suspension contient une proportion d'eau d'au moins 25 %.

8. Dispositif selon l'une des revendications précédentes, **caractérisé en ce qu'**au-dessus de la barbotine, qui est configurée sous forme d'une couche (4) sur le support (3) en forme de bande, est disposé un support supplémentaire en forme de bande, à l'aide duquel il est possible d'ajuster l'épaisseur de couche de la couche (4) formée de la barbotine, et le support supplémentaire en forme de bande étant constitué d'un matériau ou d'une matière semi-perméable, qui n'est pas perméable au liquide mais qui est perméable au liquide transféré dans la phase gazeuse lors d'un séchage.
